(19) Europäisches Patentamt
European Patent Office
Office européen des brevets

(11) **EP 4 741 685 A1**

(12) **EUROPEAN PATENT APPLICATION**

(43) Date of publication:
**13.05.2026 Bulletin 2026/20**

(21) Application number: **25213392.1**

(22) Date of filing: **04.11.2025**

(51) International Patent Classification (IPC):
**F16H 61/00** (2006.01)

(52) Cooperative Patent Classification (CPC):
**F16H 61/0021;** F16H 59/42; F16H 61/0437;
F16H 2059/147; F16H 2059/683

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.11.2024 CN 202411583325**

(71) Applicant: **Hycet Transmission System (Jiangsu) Co., Ltd.**
**Zhenjiang, Jiangsu 212200 (CN)**

(72) Inventors:
• **BAI, Jingfeng**
**Zhenjiang, 212200 (CN)**
• **JI, Xiaohui**
**Zhenjiang, 212200 (CN)**
• **SHI, Yuanyuan**
**Zhenjiang, 212200 (CN)**
• **ZHANG, Jingjing**
**Zhenjiang, 212200 (CN)**
• **GUO, Mingliang**
**Zhenjiang, 212200 (CN)**
• **TANG, Guangqing**
**Zhenjiang, 212200 (CN)**

(74) Representative: **Murgitroyd & Company**
**165-169 Scotland Street**
**Glasgow G5 8PL (GB)**

(54) **HYDRAULIC CONTROL METHOD AND APPARATUS, ELECTRONIC DEVICE, AND STORAGE MEDIUM**

(57) The present application provides a hydraulic control method and apparatus, an electronic device, and a storage medium. The hydraulic control method includes: determining a first required oil pressure corresponding to an automatic transmission, and controlling a main oil pressure in a main oil circuit corresponding to the automatic transmission according to the first required oil pressure; determining a second required oil pressure corresponding to a first clutch without a pressure sensor; and determining a target opening degree of a solenoid valve corresponding to the first clutch according to the first required oil pressure and the second required oil pressure, and controlling an opening degree of the solenoid valve to be adjusted to the target opening degree. The solenoid valve is disposed between the main oil circuit and a pressure chamber corresponding to the first clutch.

Determining a first required oil pressure corresponding to an automatic transmission, and controlling a main oil pressure in a main oil circuit corresponding to the automatic transmission according to the first required oil pressure — 101

Determining a second required oil pressure corresponding to a first clutch without a pressure sensor — 102

Determining a target opening degree of a solenoid valve corresponding to the first clutch according to the first required oil pressure and the second required oil pressure, and controlling an opening degree of the solenoid valve to be adjusted to the target opening degree, where the solenoid valve is disposed between the main oil circuit and a pressure chamber corresponding to the first clutch — 103

FIG. 1

EP 4 741 685 A1

**Description**

**TECHNICAL FIELD**

The present application relates to the field of automotive technologies, and in particular, to a hydraulic control method and apparatus, an electronic device, and a storage medium.

**BACKGROUND**

An automatic transmission equipped with multiple clutches is capable of shifting gear fast and accurately, which makes a vehicle have better power response during acceleration, overtaking, and other scenarios, thereby improving driving pleasure and safety. Currently, for the automatic transmission with all or some of the clutches being not provided with corresponding pressure sensors, pressure control on the clutch without the pressure sensor is mostly performed through full pressure control based on a main oil pressure in a main oil circuit corresponding to the automatic transmission. In other words, an opening degree of a solenoid valve corresponding to the clutch without the pressure sensor is always the largest, and the main oil pressure acts on the clutch directly. Since the main oil pressure is always higher than a clutch pressure, and when the main oil pressure is significantly higher than a required clutch pressure, it may cause the clutch to engage too tightly and abruptly, so that wear of a clutch plate is accelerated, thereby affecting performance of the clutch, and thus shortening a service life of the clutch. Moreover, it will also cause abnormal phenomena such as shuddering and slipping during the operation of the clutch, so that the power transmission and stability of the vehicle is affected, and thus affecting driving comfort.

**SUMMARY**

Embodiments of the present application provide a hydraulic control method and apparatus, an electronic device, and a storage medium to solve a problem in the conventional technology that a clutch without a pressure sensor is controlled through full pressure control based on a main oil pressure, which affects the performance of the clutch.
In a first aspect, the embodiments of the present application provide a hydraulic control method, including:

determining a first required oil pressure corresponding to an automatic transmission, and controlling a main oil pressure in a main oil circuit corresponding to the automatic transmission according to the first required oil pressure;
determining a second required oil pressure corresponding to a first clutch without a pressure sensor; and
determining a target opening degree of a solenoid valve corresponding to the first clutch according to the first required oil pressure and the, and controlling an opening degree of the solenoid valve to be adjusted to the target opening degree, where the solenoid valve is disposed between the main oil circuit and a pressure chamber corresponding to the first clutch.

In some embodiments, the determining the first required oil pressure corresponding to the automatic transmission includes:

acquiring a current input shaft rotating speed, a current input shaft torque, and a current gear position corresponding to the automatic transmission;
determining a first main oil pressure according to the current input shaft rotating speed;
determining a second main oil pressure according to the current input shaft torque and the current gear position; and
determining a maximum value among the first main oil pressure, the second main oil pressure, and a preset limit main oil pressure as the first required oil pressure.

In some embodiments, the determining the first main oil pressure according to the current input shaft rotating speed includes:

acquiring a first correspondence relationship between the input shaft rotating speed and the main oil pressure; and
determining the first main oil pressure corresponding to the current input shaft rotating speed according to the first correspondence relationship.

In some embodiments, the determining the second main oil pressure according to the current input shaft torque and the current gear position includes:

acquiring a second correspondence relationship among an input shaft torque, a gear position, and the main oil pressure; and
determining the second main oil pressure corresponding to the current input shaft torque and the current gear position according to the second correspondence relationship.

In some embodiments, the second correspondence relationship is a main oil pressure map table constructed based on the current input shaft torque and the current gear position.

In some embodiments, when a plurality of clutches corresponding to the automatic transmission includes at least one second clutch provided with the pressure sensor, after the determining the maximum value among the first main oil pressure, the second main oil pressure, and the preset limit main oil pressure as the first required oil pressure, the method also includes:

acquiring an input end torque, a clutch torque ratio, a measured clutch gain, and a preset pressure compensation corresponding to the second clutch;
determining a third main oil pressure corresponding to the second clutch according to the input end torque, the clutch torque ratio, the measured clutch gain, and the preset pressure compensation;
comparing the third main oil pressure and the first required oil pressure; and
determining the third main oil pressure as the first required oil pressure when the third main oil pressure is greater than the first required oil pressure.

In some embodiments, the method also includes: maintaining the first required oil pressure unchanged when the third main oil pressure is less than or equal to the first required oil pressure.

In some embodiments, the third main oil pressure = input end torque * clutch torque ratio / measured clutch gain + pressure compensation.

In some embodiments, the measured clutch gain is a ratio of a clutch torque to a clutch pressure.

In some embodiments, the determining the second required oil pressure corresponding to the first clutch includes:

acquiring an input end torque, a clutch torque ratio, a bench-measured clutch gain, and a preset torque compensation corresponding to the first clutch;
determining a target required oil pressure according to the input end torque, the clutch torque ratio, the bench-measured clutch gain, and the preset torque compensation; and
determining the target required oil pressure as the second required oil pressure.

In some embodiments, after the determining the target required oil pressure as the second required oil pressure, the method also includes:

comparing the target required oil pressure and a preset pressure;
determining the target required oil pressure as the second required oil pressure when the target required oil pressure is greater than the preset pressure.

In some embodiments, the method also includes: determining the preset pressure as the second required oil pressure when the target required oil pressure is less than or equal to the preset pressure.

In some embodiments, when the first required oil pressure is less than the second required oil pressure, the target opening degree is a maximum opening degree of the solenoid valve.

In a second aspect, the embodiments of the present application also provide an electronic device including a processor, a memory and a computer program stored on the memory and executable on the processor, where the computer program, when executed by the processor, the aforementioned hydraulic control method is implemented.

In a third aspect, embodiments of the present application further provide a computer-readable storage medium, where a computer program is stored on the computer-readable storage medium, and the computer program, when executed by a processor, the aforementioned hydraulic control method is implemented.

The embodiments of the present application at least include the following technical effects.

According to the technical solution of the embodiments of the present application, by determining a main oil pressure in a main oil circuit corresponding to an automatic transmission (that is, a first required oil pressure) and a second required oil pressure corresponding to a first clutch without a pressure sensor in the automatic transmission, and determining a target opening degree of a solenoid valve disposed between the main oil circuit and a pressure chamber corresponding to a first clutch according to the first required oil pressure and the second required oil pressure, so that an actual oil pressure entering the pressure chamber of the clutch via the solenoid valve is approximately equal to the second required oil pressure, thereby avoiding applying full pressure control to the clutch by using the first required oil pressure, thus preventing the clutch from engaging too tightly and suddenly, and thereby prolonging a service life of the clutch.

BRIEF DESCRIPTION OF THE DRAWINGS

To more clearly illustrate technical solutions of the embodiments of the present application or the conventional technology, the drawings required for describing the embodiments or the conventional technology will be briefly introduced in the following.

FIG. 1 is one schematic flowchart of a hydraulic control method according to an embodiment of the present application.
FIG. 2 is another schematic flowchart of a hydraulic control method according to an embodiment of the present application.
FIG. 3 is a schematic structural diagram of a hydraulic control apparatus according to an embodiment of the present application.
FIG. 4 is a block diagram of an electronic device according to an embodiment of the present application.

DETAILED DESCRIPTION OF THE EMBODIMENTS

The technical solutions in the embodiments of the present application will be clearly and completely described in the following with reference to the drawings in the embodiments of the present application. Obviously, the described embodiments are only some, embodiments of the present application, rather than all the embodiments. Based on the embodiments of the present application, all other embodiments obtained by a person with ordinary skill in the art without creative efforts shall fall within the protection scope of the present application.

It should be understood that, the term "one embodiment" or "an embodiment" mentioned throughout the specification means that a specific feature, structure, or characteristic related to the embodiment is included in at least one embodiment of the present application. Therefore, the phrase "in one embodiment" or "in an embodiment" appearing throughout the specification does not necessarily refer to the same embodiment. In addition, the specific feature, structure, or characteristic may be combined in any suitable manner in one or more embodiments.

In the various embodiments of the present application, it should be understood that the sequence numbers of the following processes do not imply an execution order. The execution order of the processes should be determined by their function and internal logic, and should not impose any limitation on the implementation process of the embodiments of the present application.

In the conventional technology, in an automatic transmission with multiple clutches, pressure control on the clutch without a pressure sensor is mostly performed through full pressure control based on a main oil pressure in a main oil circuit corresponding to the automatic transmission. In other words, an opening degree of a solenoid valve corresponding to the clutch without the pressure sensor is always the largest, and the main oil pressure acts on the clutch directly. Since the main oil pressure is always higher than a required pressure of the clutch, and when the main oil pressure is significantly higher than the required pressure of the clutch, that is, when an actual oil pressure of the clutch is significantly higher than the required pressure of the clutches, it may cause the clutch to engage too tightly and abruptly, so that wear of a clutch plate is accelerated, thereby affecting performance of the clutch, and thus shortening the service life of the clutch. Moreover, it will also cause abnormal phenomena such as shuddering and slipping during the operation of the clutch, so that the power transmission and stability of the vehicle is affected, and thereby affecting driving comfort.

Therefore, the inventor proposed a hydraulic control solution to solve the problem in the conventional technology that a clutch without a pressure sensor is controlled through full pressure control based on a main oil pressure, which affects the performance of the clutch. The technical solution of the present application will be described below through specific embodiments.

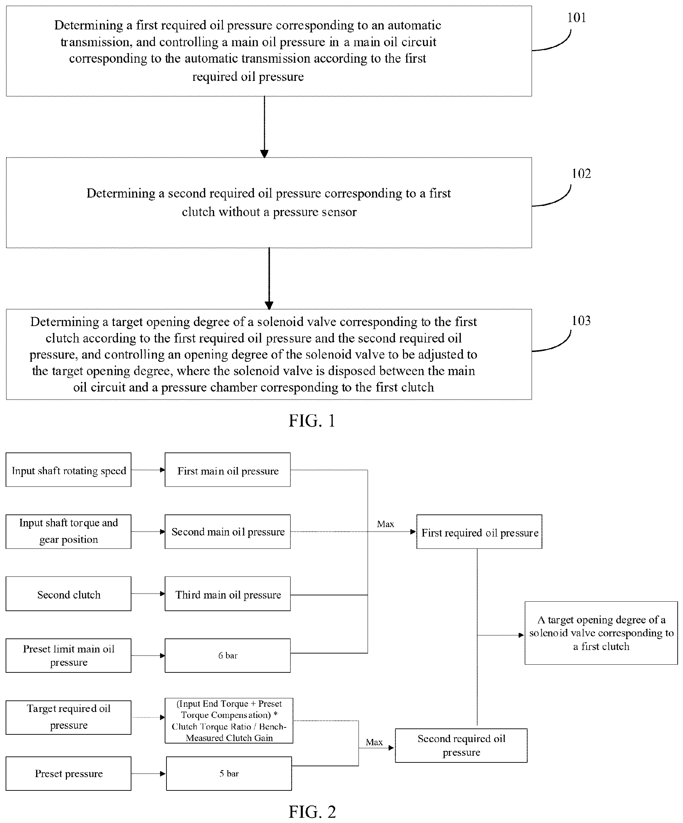

As shown in FIG. 1, the embodiments of the present application provide a hydraulic control method, the method includes:
Step 101: determining a first required oil pressure corresponding to an automatic transmission, and controlling a main oil pressure in a main oil circuit corresponding to the automatic transmission according to the first required oil pressure.

After a vehicle is started, the automatic transmission needs to be capable of flexibly selecting an appropriate clutch and a gear position combination to transmit power according to a driving condition of the vehicle, thereby enabling an engine to operate under more efficient conditions. Therefore, to ensure the normal operation of the automatic transmission, it is necessary to determine a required oil pressure (that is, the first required oil pressure for the automatic transmission) according to an operational requirement of the automatic transmission. After determining the first required oil pressure, the main oil pressure in the main oil circuit corresponding to the automatic transmission is controlled according to the first required oil pressure to make the main oil pressure in the main oil circuit be equal to the first required oil pressure.

Specifically, hydraulic adjustment of the main oil pressure in the main oil circuit may be achieved by using a solenoid valve on the main oil circuit to adjust the main oil pressure in the main oil circuit, by changing original output to adjust the main oil pressure in the main oil circuit, or by using a throttling device to adjust the main oil pressure in the main oil circuit. The method of the hydraulic adjustment of the main oil pressure is not specifically limited in the present application.

Step 102: determining a second required oil pressure corresponding to a first clutch without a pressure sensor.

In the embodiments of the present application, among the multiple clutches cooperating with the automatic transmission, some clutches may not be provided with the pressure sensor, or all the clutches may not be provided with the pressure sensor. Among them, the clutch without the pressure sensor is the first clutch, and the clutch with the pressure sensor is a second clutch.

In the clutch, an oil pressure is a key factor for achieving smooth power transmission. When the oil pressure acts on a piston in a pressure chamber of the clutch, the piston will push clutch plates, and as the oil pressure increases, a pressing force between the clutch plates gradually increases. A power generated by a flywheel of an engine is transmitted to an input shaft of the transmission through a friction force. At this time, by precisely controlling a magnitude and a change rate of a clutch oil pressure, the power will be transmitted progressively, thereby avoiding sudden power shocks during the vehicle starting or gear shifting.

For the second clutch, since it is equipped with the pressure sensor, an opening degree of the solenoid valve located between the pressure chamber of the second clutch and the main oil circuit may be precisely controlled based on a clutch pressure collected by the pressure sensor. Therefore, the control of the opening degree of the solenoid valve corresponding to the second clutch is not within the scope of the hydraulic control described in the embodiments of the present application.

For the first clutch in the embodiments of the present application, it should be noted that, when there are a plurality of first clutches, the corresponding second required oil pressure is determined individually for each of the plurality of first clutches.

Specifically, when determining the second required oil pressure, it is necessary to be determined by taking into account the driving condition of the vehicle and the characteristic of the clutch, and other relevant factors.

Step 103: determining a target opening degree of the solenoid valve corresponding to the first clutch according to the first required oil pressure and the second required oil pressure, and controlling the opening degree of the solenoid valve to be adjusted to the target opening degree. The solenoid valve is disposed between the main oil circuit and a pressure chamber corresponding to the first clutch.

Specifically, the solenoid valve is disposed between the main oil circuit and the pressure chamber corresponding to each first clutch, and the solenoid valve is used for adjusting the oil pressure entering the pressure chamber of the clutch from the main oil circuit. Since the main oil pressure in the main oil circuit is determined based on the first required oil pressure, therefore, the first required oil pressure is the main oil pressure in the main oil circuit corresponding to the automatic transmission.

Then, after determining the first required oil pressure and the second required oil pressure, the target opening degree of the solenoid valve corresponding to the first clutch may be determined based on the first required oil pressure and the second required oil pressure, and the opening degree of the solenoid valve is controlled to be adjusted to the target opening degree.

Among them, the first required oil pressure is the main oil pressure in the main oil circuit, and the second required oil pressure is the required oil pressure of the clutch. By controlling the opening degree of the solenoid valve of the clutch, the actual oil pressure of the oil entering the pressure chamber of the clutch via the solenoid valve is approximately equal to the second required oil pressure.

It should be noted that there is a certain relationship among a flow rate of the oil flowing through the solenoid valve, the opening degree of the solenoid valve, the main oil pressure, and the required oil pressure corresponding to the clutch. Different solenoid valves have different flow-opening characteristic curves, which are generally determined by the design and manufacturing of the solenoid valve. The characteristic curves may be linear or non-linear. When the first required oil pressure is greater than the second required oil pressure, the target opening degree of the solenoid valve may be determined based on a difference between the first required oil pressure and the second required oil pressure, combined with the flow-opening characteristic curve of the solenoid valve. When the first required oil pressure is less than the second required oil pressure, the target opening degree is the maximum opening degree of the solenoid valve, so that the main oil pressure in the main oil circuit, that is, the first required oil pressure, may fully act on the clutch.

When controlling the opening degree of the solenoid valve to be adjusted to the target opening degree, the opening degree may be adjusted by sending a corresponding control signal to the solenoid valve. For a current-driven solenoid valve, currents with different magnitudes are output to control a position of a valve core of the solenoid valve.

In the embodiments of the present application, by determining the main oil pressure in the main oil circuit corresponding to the automatic transmission (that is, the first required oil pressure) and the second required oil pressure corresponding to the first clutch without a pressure sensor in the automatic transmission, and determining the target opening degree of the solenoid valve disposed between the main oil circuit and a pressure chamber corresponding to a first clutch according to the first required oil pressure and the second required oil pressure, thereby enabling an actual oil pressure of the oil entering the pressure chamber of the clutch via the solenoid valve to be approximately equal to the second required oil pressure. Therefore, full pressure control by using the first required oil pressure is avoided applying to the clutch, so that the clutch is prevented from engaging too tightly and suddenly, thereby prolonging a service life of the clutch.

In an optional embodiment of the present application, the determining the first required oil pressure corresponding to the automatic transmission in step 101 includes:

acquiring a current input shaft rotating speed, a current input shaft torque, and a current gear position corresponding to the automatic transmission;
determining a first main oil pressure according to the current input shaft rotating speed;
determining a second main oil pressure according to the current input shaft torque and the current gear position; and
determining a maximum value among the first main oil pressure, the second main oil pressure, and a preset limit main oil pressure as the first required oil pressure.

When determining the first required oil pressure (that is, the main oil pressure in the main oil circuit) of the automatic transmission, it is necessary to acquire the current input shaft rotating speed, the current input shaft torque, and the current gear position of the automatic transmission, where the current input shaft rotating speed is a current speed transmitted from the engine to the automatic transmission, the current input shaft torque is a torque transmitted from the engine to the automatic transmission, and the current gear position is a gear position of the automatic transmission. The gear position of the automatic transmission is used for changing a transmission ratio to control the speed of the vehicle and the power output.

The automatic transmission includes numerous components such as gears, bearings and shafts. These components require adequate lubrication when the input shaft is rotating to reduce friction and wear. Therefore, it is necessary to determine the first main oil pressure according to the current input shaft rotating speed of the automatic transmission, and the first main oil pressure is used for satisfying the lubrication requirements of the components during the rotation of the input shaft.

Since a greater input shaft torque requires a stronger clutch for power transmission, when the input shaft torque increases, the oil pressure generally needs to be increased accordingly to ensure that the power be effectively transmitted. For example, when the vehicle is accelerating or climbing a slope, the torque output by the engine increases, and the automatic transmission needs to increase the oil pressure to increase the clamping force between the clutch plates to prevent slipping. If the oil pressure does not increase accordingly, it may cause inefficient power transmission and even damage to the internal components of the transmission. When the vehicle requires a large traction force, such as during starting, climbing a slope, or driving with a heavy load, the automatic transmission will select a low gear position, and at this time, the input shaft torque is transmitted to the wheels after being amplified by a greater transmission ratio. In the low gear position, the large transmission ratio results in the large transmitted torque, which typically requires a higher oil pressure. As the gear position shifts up, the transmission ratio decreases, and the transmitted torque also relatively decreases, so that the oil pressure demand generally decreases. Therefore, it is necessary to determine the second main oil pressure according to the current input shaft torque and the current gear position of the automatic transmission. The second main oil pressure is used for ensuring reliable engagement of the clutch under the current input shaft torque and the current gear position, thereby ensuring effective torque transmission.

A preset limit main oil pressure is primarily set to ensure a basic function of the automatic transmission. If the main oil pressure is too low, it may cause the clutch to fail to engage or disengage normally, hydraulic components to malfunction, and the lubrication and the cooling system to fail to circulate oil effectively. By setting the preset limit main oil pressure, it may be ensured that the first required oil pressure is not lower than the preset limit main oil pressure, thereby providing a basic safety guarantee for the hydraulic system of the automatic transmission, and thus ensuring that the automatic transmission may operate normally even under some special conditions, such as that the vehicle is at an extremely low speed.

After determining the first main oil pressure and the second main oil pressure, the maximum value among the first main oil pressure, the second main oil pressure, and the preset limit main oil pressure is determined as the first required oil pressure.

In the above implementation of the present application, by determining the first main oil pressure and the second main oil pressure, and determining the maximum value among the first main oil pressure, the second main oil pressure, and the preset limit main oil pressure as the first required oil pressure, it is ensured that the main oil pressure in the main oil circuit determined based on the first required oil pressure may precisely match with power transmission requirements, adapt to different speed conditions, and meet different torque requirements. Additionally, it enables precise control of the oil pressure during the gear shifting and quickly respond to driving intentions, so that excessive wear and damage to components is avoided, and the effective operation of the lubrication and the cooling system is ensured.

In an optional embodiment of the present application, the determining the first main oil pressure according to the current input shaft rotating speed includes:

acquiring a first correspondence relationship between the input shaft rotating speed and the main oil pressure; and determining the first main oil pressure corresponding to the current input shaft rotating speed according to the first correspondence relationship.

Specifically, when determining the first main oil pressure, it is necessary to acquire a pre-calibrated first correspondence relationship between the input shaft rotating speed and the first main oil pressure.

The first correspondence relationship may be:

$$
\text{First Main Oil Pressure} = \begin{cases} 0, & n < 2800 \\ 0.0167 * n - 46.667, & 2800 \leq n \leq 4000 \\ 20, & n > 4000 \end{cases}
$$

where, n is the input shaft rotating speed.

According to the first correspondence relationship, the first main oil pressure corresponding to the current input shaft rotating speed may be determined.

In the above implementation of the present application, by determining the first main oil pressure according to the current input shaft rotating speed, the automatic transmission will better adapt to the power transmission requirements of the vehicle at different driving speeds. When driving at a low speed, the input shaft rotating speed is lower, and the required main oil pressure is also relatively low, which meets the power transmission requirements for conditions such as vehicle starting and slow driving. When the vehicle is idling, the input shaft rotating speed is lower, and the corresponding main oil pressure may be maintained at a lower level to allow the hydraulic components inside the transmission to operate at a lower pressure, thereby ensuring that the power may be transmitted to the wheels for slow movement of the vehicle, while avoiding energy loss and component wear caused by an excessively high oil pressure. When the vehicle is driving at a high speed, the input shaft rotating speed increases, and the automatically elevated main oil pressure is capable of providing sufficient pressure for the high-speed rotating components inside the transmission, thereby ensuring efficient and stable power transmission. For instance, during high-speed overtaking, it is ensured that the transmission quickly responds and transmits sufficient power.

In an optional embodiment of the present application, the determining the second main oil pressure according to the current input shaft torque and the current gear position includes:

acquiring a second correspondence relationship among the input shaft torque, the gear position, and the main oil pressure; and determining the second main oil pressure corresponding to the current input shaft torque and the current gear position according to the second correspondence relationship.

Specifically, when determining the second main oil pressure, it is necessary to acquire a pre-calibrated second correspondence relationship among the input shaft torque, the gear position, and the main oil pressure, and then the second main oil pressure corresponding to the current input shaft torque and the current gear position may be determined according to the second correspondence relationship. The second correspondence relationship may be a main oil pressure map table constructed based on the input shaft torque and the gear position.

When an input torque increases, a higher main oil pressure is required to ensure that internal transmission components such as the clutch, and the brake will effectively transmit power and prevent slipping. Due to the greater torque requiring a greater friction force to transmit, and the higher main oil pressure generates stronger pressure between the friction plates of the clutch and the brake, thereby producing sufficient friction force. For example, when the vehicle is climbing the slope or accelerating rapidly, the engine outputs a greater torque, and at this time, it is necessary to look up an appropriate main oil pressure from the main oil pressure map table according to the greater input torque to ensure smooth power transmission.

Different gear positions also have different requirements for the main oil pressure. In the low gear position, such as in a first gear position or a second gear position, the transmission needs to provide a greater torque multiplication ratio to meet the demands of the vehicle starting, climbing, and other conditions. At this time, the clutch and the brake need to withstand a greater load, so the higher main oil pressure is generally required. In the high gear position, the main task of the transmission is to achieve high-speed and efficient power transmission, so that the torque multiplication ratio is relatively smaller, and thus the required main oil pressure may be relatively low. For example, in a fifth gear position or a sixth gear position during high-speed cruising, the main oil pressure may be appropriately reduced, which is reflected in the main oil pressure Map table as different patterns of the main oil pressure variation with the input torque under different gear positions.

According to the above implementation of the present application, by determining the second main oil pressure according to the current input shaft torque and the current gear position, it is ensured that the transmission will effectively transmit power under various load conditions, so that power transmission according to the characteristics of the gear position is optimized. In the low gear position, the gear ratio is large, and a greater torque is required to drive the vehicle. Therefore, determining a relatively higher main oil pressure based on the characteristics of the low gear position helps to provide sufficient power during starting and low-speed driving. In the high gear position, the gear ratio is small, and the vehicle speed is high. The main oil pressure determined based on the high gear position may ensure the power transmission while allowing the transmission to operate under more economical oil pressure, thereby improving fuel economy.

In an optional embodiment of the present application, when a plurality of clutches corresponding to the automatic transmission includes at least one second clutch provided with the pressure sensor, after the determining the maximum value among the first main oil pressure, the second main oil pressure, and the preset limit main oil pressure as the first required oil pressure, the method also includes:

> acquiring an input end torque, a clutch torque ratio, a measured clutch gain, and a preset pressure compensation corresponding to the second clutch;
> determining a third main oil pressure corresponding to the second clutch according to the input end torque, the clutch torque ratio, the measured clutch gain, and the preset pressure compensation;
> comparing the third main oil pressure and the first required oil pressure;
> determining the third main oil pressure as the first required oil pressure when the third main oil pressure is greater than the first required oil pressure; or
> maintaining the first required oil pressure unchanged when the third main oil pressure is less than or equal to the first required oil pressure.

Specifically, when the plurality of clutches corresponding to the automatic transmission includes the at least one second clutch provided with the pressure sensor, since the second clutch is equipped with the pressure sensor, the clutch gain, that is, the measured clutch gain, may be calculated based on the clutch pressure collected by the pressure sensor. Therefore, when calculating the first required oil pressure, if there is the second clutch, it is necessary to calculate the third main oil pressure corresponding to the second clutch. The measured clutch gain is a ratio of the clutch torque to the clutch pressure, which reflects the amount of the torque that the clutch may transmit per unit pressure.

Among them, Third Main Oil Pressure = Input End Torque * Clutch Torque Ratio / Measured Clutch Gain + Pressure Compensation. The clutch torque ratio is a ratio of the clutch torque to the transmission input torque, which represents a proportional relationship between the actual torque transmitted by the clutch and the input torque. The pressure compensation is a clutch overpressure, which is generally above 2 bars. Increasing the overpressure may ensure that, after the clutch engagement, any clutch slippage caused by torque fluctuations or other factors is minimized, thereby enabling more complete clutch engagement.

After obtaining the third main oil pressure, it is compared with the first required oil pressure, and the greater of the two is determined as the first demand pressure. That is, when the third main oil pressure is greater than the first required oil pressure, the third main oil pressure is determined as the first required oil pressure; or, when the third main oil pressure is less than or equal to the first required oil pressure, the first required oil pressure remains unchanged.

According to the above implementation of the present application, for the second clutch equipped with the pressure sensor, the third main oil pressure corresponding to the second clutch is also calculated, and the third main oil pressure is taken as a factor for determining the first required oil pressure, which may ensure the main oil pressure to reliably support the normal operation of the second clutch.

In an optional embodiment of the present application, the determining the second required oil pressure corresponding to the first clutch in step 102 includes:

> acquiring an input end torque, a clutch torque ratio, a bench-measured clutch gain, and a preset torque compensation corresponding to the first clutch;
> determining a target required oil pressure according to the input end torque, the clutch torque ratio, the bench-measured clutch gain, and the preset torque compensation; and
> determining the target required oil pressure as the second required oil pressure.

Specifically, when determining the second required oil pressure corresponding to the first clutch, since the first clutch is not equipped with the pressure sensor, it is necessary to obtain the clutch gain, that is, the bench-tested clutch gain, based on the bench testing.

When determining the target required oil pressure according to the input end torque, the clutch torque ratio, the bench-measured clutch gain, and the preset torque compensation, the target required oil pressure is calculated as follows: Target Required Oil Pressure = (Input End Torque + Preset Torque Compensation) * Clutch Torque Ratio / Bench-Tested Clutch Gain.

Among them, the preset torque compensation involves adding an over-torque at the input end. This method may more effectively reduce the impact of torque fluctuations on clutch engagement.

In the above implementation of the present application, when calculating the second required oil pressure, by introducing the input end torque, the oil pressure may precisely match with the actual power input. By introducing the clutch torque ratio and the bench-tested clutch gain, the structural and performance characteristics of the clutch itself are taken into account. The clutch torque ratio reflects the actual torque distribution during the power transmission process of the clutch, and the bench-tested clutch gain reflects the sensitivity of the clutch to the oil pressure. Data obtained from the bench testing may more accurately reflect the working characteristics of the clutch. By determining the oil pressure in combination with these two parameters, power transmission may be optimized according to the specific characteristics of the clutch, thereby ensuring that the clutch operates in the best condition under various working conditions. The preset torque compensation is set considering various factors that may arise in the actual working environment, thereby ensuring that the clutch operates normally, so that power transmission instability caused by various uncertainties is effectively reduced, and thus the reliability of the system is improved.

In an optional embodiment of the present application, after the determining the target required oil pressure as the second required oil pressure, the method also includes:

comparing the target required oil pressure and the preset pressure;
determining the target required oil pressure as the second required oil pressure when the target required oil pressure is greater than the preset pressure; or
determining the preset pressure as the second required oil pressure when the target required oil pressure is less than or equal to the preset pressure.

Specifically, to ensure that there is sufficient clamping force between the clutch plates to transmit power under any operating condition, the preset pressure is set. The preset pressure needs to be determined through experimental calibration. For example, the preset pressure may be set as 5 bar. When the clutch pressure is lower than the preset pressure, the friction force between the clutch plates may not be sufficient to withstand the torque transmitted by the engine, thereby resulting in slippage.

By comparing the target required oil pressure and the preset pressure, and determining the greater one as the second required oil pressure, it may be ensured that the actual oil pressure of the clutch is greater than the preset pressure, thereby avoiding slippage caused by insufficient friction force between the clutch plates, which would otherwise be uncapable of withstanding the torque transmitted by the engine.

In the above implementation of the present application, by comparing the target required oil pressure with the preset pressure, the actual clutch oil pressure is prevented from less that the preset oil pressure. This will ensure normal contact and separation of the clutch plates, and thus reducing abnormal wear caused by insufficient pressure.

The overall implementation process of the embodiment of the present application is introduced below. As shown in FIG. 2, when determining the target opening degree of the solenoid valve corresponding to the first clutch, it is necessary to determine the first required oil pressure and the second required oil pressure. The first required oil pressure is the main oil pressure in the main oil circuit corresponding to the automatic transmission. The first required oil pressure is the maximum value among the first main oil pressure, the second main oil pressure, the third main oil pressure, and the preset limit main oil pressure. The first main oil pressure is determined based on the input shaft rotating speed, the second main oil pressure is determined based on the input shaft torque and the gear position, and the third main oil pressure is determined based on the second clutch equipped with the pressure sensor. The second required oil pressure is the greater value between the target required oil pressure and the preset pressure.

In the above implementation, by determining the main oil pressure in the main oil circuit corresponding to the automatic transmission (that is, the first required oil pressure) and the second required oil pressure corresponding to the first clutch without the pressure sensor in the automatic transmission, and determining the target opening degree of the solenoid valve disposed between the main oil circuit and the pressure chamber corresponding to the first clutch according to the first required oil pressure and the second required oil pressure, so that the actual oil pressure of the oil entering the pressure chamber of the clutch via the solenoid valve is approximately equal to the second required oil pressure, thereby avoiding applying full pressure control to the clutch by using the first required oil pressure. Therefore, the clutch is prevented from engaging too tightly and suddenly, and thus prolonging the service life of the clutch.

The hydraulic control method provided by the embodiment of the present application is introduced above. A hydraulic control apparatus provided by the embodiment of the present application will be introduced with reference to the drawings below.

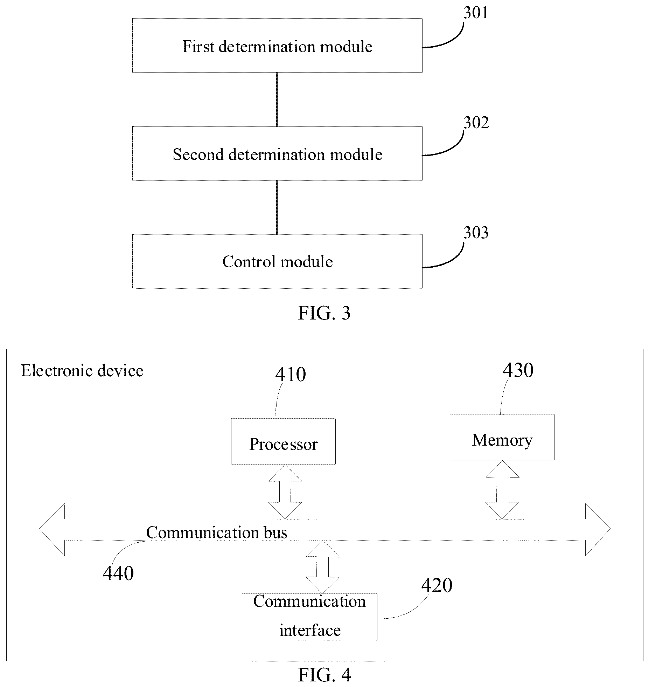

As shown in FIG. 3, the embodiments of the present application also provide a hydraulic control apparatus, the apparatus includes:

a first determination module 301, configured to determine a first required oil pressure corresponding to an automatic transmission, and control a main oil pressure in a main oil circuit corresponding to the automatic transmission according to the first required oil pressure;
a second determination module 302, configured to determine a second required oil pressure corresponding to a first clutch without a pressure sensor; and
a control module 303, configured to determine a target opening degree of a solenoid valve corresponding to the first clutch according to the first required oil pressure and the second required oil pressure, and control an opening degree of the solenoid valve to be adjusted to the target opening degree, wherein the solenoid valve is disposed between the main oil circuit and a pressure chamber corresponding to the first clutch.

Optionally, the first determination module includes:

a first acquisition sub-module, configured to acquire a current input shaft rotating speed, a current input shaft torque, and a current gear position corresponding to the automatic transmission;
a first determination sub-module, configured to determine a first main oil pressure according to the current input shaft rotating speed;
a second determination sub-module, configured to determine a second main oil pressure according to the current input shaft torque and the current gear position; and
a third determination sub-module, configured to determine a maximum value among the first main oil pressure, the second main oil pressure, and a preset limit main oil pressure as the first required oil pressure.

Optionally, the first determination sub-module includes:

a first acquisition unit, configured to acquire a first correspondence relationship between the input shaft rotating speed and the main oil pressure; and
a first determination unit, configured to determine the first main oil pressure corresponding to the current input shaft rotating speed according to the first correspondence relationship.

Optionally, the second determination sub-module includes:

a second acquisition unit, configured to acquire a second correspondence relationship among the input shaft torque, the gear position, and the main oil pressure;
a second determination unit, configured to determine the second main oil pressure corresponding to the current input shaft torque and the current gear position according to the second correspondence relationship.

Optionally, when a plurality of clutches corresponding to the automatic transmission includes at least one second clutch provided with the pressure sensor, after the determining the maximum value among the first main oil pressure, the second main oil pressure, and the preset limit main oil pressure as the first required oil pressure, the first determination module also includes:

a second acquisition sub-module, configured to acquire an input end torque, a clutch torque ratio, a measured clutch gain, and a preset pressure compensation corresponding to the second clutch;
a fourth determination sub-module, configured to determine a third main oil pressure corresponding to the second clutch according to the input end torque, the clutch torque ratio, the measured clutch gain, and the preset pressure compensation;
a first comparison sub-module, configured to compare the third main oil pressure and the first required oil pressure;
a fifth determination sub-module, configured to determine the third main oil pressure as the first required oil pressure when the third main oil pressure is greater than the first required oil pressure; or maintain the first required oil pressure unchanged when the third main oil pressure is less than or equal to the first required oil pressure.

Optionally, the second determination module includes:

a third acquisition sub-module, configured to acquire an input end torque, a clutch torque ratio, a bench-measured clutch gain, and a preset torque compensation corresponding to the first clutch;
a sixth determination sub-module, configured to determine a target required oil pressure according to the input end torque, the clutch torque ratio, the bench-measured clutch gain, and the preset torque compensation; and
a seventh determination sub-module, configured to determine the target required oil pressure as the second required oil pressure.

Optionally, after determining the target required oil pressure as the second required oil pressure, the second determination module also includes:

a second comparison submodule, configured to compare the target required oil pressure and a preset pressure;
an eighth determination submodule, configured to determine the target demand pressure as the second required oil pressure when the target required oil pressure is greater than the preset pressure; determine the preset pressure as the second required oil pressure when the target required oil pressure is less than or equal to the preset pressure.

According to the hydraulic control apparatus provided by the present application, by determining the main oil pressure in the main oil circuit corresponding to the automatic transmission (that is, the first required oil pressure) and the second required oil pressure corresponding to the first clutch without the pressure sensor in the automatic transmission, and determining the target opening degree of the solenoid valve disposed between the main oil circuit and the pressure chamber corresponding to the first clutch according to the first required oil pressure and the second required oil pressure, so that the actual oil pressure of the oil entering the pressure chamber of the clutch via the solenoid valve is approximately equal to the second required oil pressure, thereby avoiding applying full pressure control to the clutch by using the first required oil pressure. Therefore, the clutch from engaging too tightly and suddenly is prevented, and thus prolonging the service life of the clutch.

For the embodiment of the apparatus, since it is basically similar to the embodiment of the method, the description is relatively simple, and the relevant portion please refer to the description of the embodiment of the method.

The embodiment of the present application also provides an electronic device including a processor, a memory and a computer program stored on the memory and executable on the processor. When the computer program is executed by the processor, the various processes of the embodiment of the hydraulic control method are implemented, and the same technical effects are achieved. To avoid repetition, it will not be repeated herein.

For example, FIG. 4 shows a schematic structural diagram of the physical structure of an electronic device. As shown in FIG. 4, the electronic device may include a processor 410, a communication interface 420, a memory 430 and a communication bus 440. The processor 410, the communication interface 420, and the memory 430 communicate with each other through the communication bus 440. The processor 410 is configured to invoke logic instructions stored the memory 430 to execute the following operations: determining a first required oil pressure corresponding to an automatic transmission, and controlling a main oil pressure in a main oil circuit corresponding to the automatic transmission according to the first required oil pressure; determining a second required oil pressure corresponding to a first clutch without a pressure sensor; and determining a target opening degree of a solenoid valve corresponding to the first clutch according to the first required oil pressure and the second required oil pressure, and controlling an opening degree of the solenoid valve to be adjusted to the target opening degree, where the solenoid valve is disposed between the main oil circuit and a pressure chamber corresponding to the first clutch. The processor 410 may also be configured to execute other solutions in the embodiments of the present application, which will not be further elaborated herein.

In addition, the logical instructions in the memory 430 may be implemented in the form of software functional units and sold or used as an independent product which may be stored in a computer-readable storage medium. Based on this understanding, the technical solution of the present application, in essence, or the portion that contributes to the conventional technology, or the portion of the technical solution, may be embodied in the form of a software product which is stored in a storage medium and includes several instructions to enable a computer device (which may be a personal computer, a server, or a network device, and so on) to execute all or a portion of the steps of the method described in the various embodiments of the present application.

The embodiment of the present application also provides a computer-readable storage medium, where a computer program is stored on the computer-readable storage medium, and when the computer program is executed by a processor, the various processes of the embodiment of the hydraulic control method are implemented, and the same technical effects are achieved. To avoid repetition, it will not be repeated herein. Among them, the computer-readable storage medium includes, for example, a read-only memory (ROM), a random-access memory (RAM), a magnetic disk, or optical disks.

It should be noted that in this specification, the terms "include", "contain", or any other variants thereof are intended to cover non-exclusive inclusion, so that a process, a method, an article, or an apparatus including a series of elements not only includes those elements, but also includes other elements not explicitly listed, or elements inherent to the process, the method, the article, or the apparatus. Without more restrictions, an element defined by the statement "including a..." does not exclude the existence of additional identical elements in the process, the method, the article, or the apparatus that includes the element.

Through the description of the above implementation methods, a person skilled in the art may clearly understand that the methods of the above embodiments may be implemented by means of a software and a necessary general hardware platform, and of course, may also be implemented by a hardware, but in many cases, the former is a better implementation method. Based on this understanding, the technical solution of the present application, in essence, or the portion that contributes to the conventional technology, may be embodied in the form of a software product. The computer software product may be stored in a storage medium (such as ROM/RAM, magnetic disks, optical disks) and includes several instructions to enable a terminal (which may be a mobile phone, a computer, a server, an air conditioner, or a network device, and so on) to execute the methods described in the various embodiments of the present application.

The embodiments of the present application are described above with reference to the drawings, but the present application is not limited to the above specific implementation methods. The above specific implementation methods are only illustrative rather than restrictive. Under the inspiration of the present application, a person skilled in the art may make many forms without departing from the purpose of the present application and the scope protected by the claims, all of which fall within the protection of the present application.

A person skilled in the art may realize that the units and algorithm steps of the examples described in the embodiments disclosed in the present application may be implemented by an electronic hardware, or a combination of a computer software and the electronic hardware. Whether these functions are implemented in the form of hardware or software depends on the specific application and design constraints of the technical solution. Professional technicians may use different methods to implement the described functions for each specific application, but such implementation should not be considered beyond the scope of the present application.

A person skilled in the art may clearly understand that, for the convenience and brevity of the description, the specific working processes of the systems, the apparatus, and units described above may refer to the corresponding processes in the aforementioned embodiments of the method, and will not be repeated herein.

In the embodiments provided in the present application, it should be understood that the disclosed apparatus and methods may be implemented in other ways. For example, the apparatus embodiments described above are merely illustrative. For example, the division of the units is only a logical function division, and there may be other division methods in actual implementation. For example, multiple units or components may be combined or integrated into another system, or some features may be ignored or not implemented. In addition, the coupling or direct coupling or communication connection between the displayed or discussed components may be realized through some interfaces, apparatus, or units, and the indirect coupling or communication connection may be electrical, mechanical, or other forms.

The units described as separate components may or may not be physically separated, and the components displayed as a unit may or may not be a physical unit, that is, they may be located in one place or distributed across multiple network units. Some or all of the units may be selected according to actual requirement to achieve the purpose of the solution of this embodiment.

In addition, the functional units in various embodiments of the present application may be integrated into one processing unit, or each unit may physically exist separately, or two or more units may be integrated into one unit.

When the functions are implemented in the form of software functional units and sold or used as an independent product, they may be stored in a computer-readable storage medium. Based on this understanding, the technical solution of the present application, in essence, or the portion that contributes to the conventional technology, or a portion of the technical solution, may be embodied in the form of a software product. The computer software product is stored in a storage medium and includes several instructions to enable a computer device (which may be a personal computer, a server, or a network device, and so on) to execute all or a portion of the steps of the methods described in the various embodiments of the present application. The aforementioned storage medium includes U disks, mobile hard disks, ROM, RAM, magnetic disks, or optical disks, and other media that may store program code.

The above description is only a specific implementation of the present application, but the scope of protection of the present application is not limited to this. Any changes or substitutions that can be easily conceived by a person skilled in the art within the technical scope disclosed in the present application should be covered within the protection scope of the present application.

## Claims

1. A hydraulic control method, comprising:

   determining (S101) a first required oil pressure corresponding to an automatic transmission, and controlling a main oil pressure in a main oil circuit corresponding to the automatic transmission according to the first required oil pressure;
   determining (S102) a second required oil pressure corresponding to a first clutch without a pressure sensor; and
   determining (S103) a target opening degree of a solenoid valve corresponding to the first clutch according to the first required oil pressure and the second required oil pressure, and controlling an opening degree of the solenoid valve to be adjusted to the target opening degree, wherein the solenoid valve is disposed between the main oil circuit and a pressure chamber corresponding to the first clutch.

2. The hydraulic control method according to claim 1, wherein the determining the first required oil pressure corresponding to the automatic transmission comprises:

acquiring a current input shaft rotating speed, a current input shaft torque, and a current gear position corresponding to the automatic transmission;
determining a first main oil pressure according to the current input shaft rotating speed;
determining a second main oil pressure according to the current input shaft torque and the current gear position; and
determining a maximum value among the first main oil pressure, the second main oil pressure, and a preset limit main oil pressure as the first required oil pressure.

3. The hydraulic control method according to claim 2, wherein the determining the first main oil pressure according to the current input shaft rotating speed comprises:

acquiring a first correspondence relationship between the input shaft rotating speed and the main oil pressure; and
determining the first main oil pressure corresponding to the current input shaft rotating speed according to the first correspondence relationship.

4. The hydraulic control method according to claim 3, wherein the first correspondence relationship is:

$$\text{first main oil pressure} = \begin{cases} 0, \ n < 2800 \\ 0.0167 * n - 46.667, 2800 \leq n \leq 4000 \\ 20, \ n > 4000 \end{cases}$$

wherein, n is the input shaft rotating speed.

5. The hydraulic control method according to any one of claims 2 to 4, wherein the determining the second main oil pressure according to the current input shaft torque and the current gear position comprises:

acquiring a second correspondence relationship among an input shaft torque, a gear position, and the main oil pressure; and
determining the second main oil pressure corresponding to the current input shaft torque and the current gear position according to the second correspondence relationship.

6. The hydraulic control method according to claim 5, wherein the second correspondence relationship is a main oil pressure map table constructed based on the current input shaft torque and the current gear position.

7. The hydraulic control method according to any one of claims 2 to 6, wherein, when a plurality of clutches corresponding to the automatic transmission comprises at least one second clutch provided with the pressure sensor, after the determining the maximum value among the first main oil pressure, the second main oil pressure, and the preset limit main oil pressure as the first required oil pressure, the method further comprises:

acquiring an input end torque, a clutch torque ratio, a measured clutch gain, and a preset pressure compensation corresponding to the second clutch;
determining a third main oil pressure corresponding to the second clutch according to the input end torque, the clutch torque ratio, the measured clutch gain, and the preset pressure compensation;
comparing the third main oil pressure and the first required oil pressure;
determining the third main oil pressure as the first required oil pressure when the third main oil pressure is greater than the first required oil pressure.

8. The hydraulic control method according to claim 7, wherein the method further comprises:
maintaining the first required oil pressure unchanged when the third main oil pressure is less than or equal to the first required oil pressure.

9. The hydraulic control method according to claim 7 or claim 8, wherein the measured clutch gain is a ratio of a clutch torque to a clutch pressure.

10. The hydraulic control method according to any one of claims 1 to 9, wherein the determining the second required oil pressure corresponding to the first clutch comprises:

   acquiring an input end torque, a clutch torque ratio, a bench-measured clutch gain, and a preset torque compensation corresponding to the first clutch;
   determining a target required oil pressure according to the input end torque, the clutch torque ratio, the bench-measured clutch gain, and the preset torque compensation; and
   determining the target required oil pressure as the second required oil pressure.

11. The hydraulic control method according to claim 10, wherein, after the determining the target required oil pressure as the second required oil pressure, the method further comprises:

   comparing the target required oil pressure and a preset pressure;
   determining the target required oil pressure as the second required oil pressure when the target required oil pressure is greater than the preset pressure.

12. The hydraulic control method according to claim 11, wherein the method further comprises: determining the preset pressure as the second required oil pressure when the target required oil pressure is less than or equal to the preset pressure.

13. The hydraulic control method according to any one of claims 1 to 12, wherein when the first required oil pressure is less than the second required oil pressure, the target opening degree is a maximum opening degree of the solenoid valve.

14. An electronic device, comprising a processor, a memory and a computer program stored on the memory and executable on the processor, wherein the computer program, when executed by the processor, the hydraulic control method according to any one of claims 1 to 13 is implemented.

15. A computer-readable storage medium, wherein a computer program is stored on the computer-readable storage medium, and the computer program, when executed by a processor, the hydraulic control method according to any one of claims 1 to 13 is implemented.

EP 4 741 685 A1

Determining a first required oil pressure corresponding to an automatic transmission, and controlling a main oil pressure in a main oil circuit corresponding to the automatic transmission according to the first required oil pressure

101

Determining a second required oil pressure corresponding to a first clutch without a pressure sensor

102

Determining a target opening degree of a solenoid valve corresponding to the first clutch according to the first required oil pressure and the second required oil pressure, and controlling an opening degree of the solenoid valve to be adjusted to the target opening degree, where the solenoid valve is disposed between the main oil circuit and a pressure chamber corresponding to the first clutch

103

FIG. 1

| Input shaft rotating speed | → | First main oil pressure |
| Input shaft torque and gear position | → | Second main oil pressure | Max → First required oil pressure |
| Second clutch | → | Third main oil pressure |
| Preset limit main oil pressure | → | 6 bar |

→ A target opening degree of a solenoid valve corresponding to a first clutch

| Target required oil pressure | → | (Input End Torque + Preset Torque Compensation) * Clutch Torque Ratio / Bench-Measured Clutch Gain | Max → Second required oil pressure |
| Preset pressure | → | 5 bar |

FIG. 2

First determination module — 301

Second determination module — 302

Control module — 303

FIG. 3

Electronic device

Processor 410

Memory 430

Communication bus 440

Communication interface 420

FIG. 4

Europäisches
Patentamt

European
Patent Office

Office européen
des brevets

# EUROPEAN SEARCH REPORT

**Application Number**

EP 25 21 3392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 007298 A (TOYOTA MOTOR CORP) 13 January 2011 (2011-01-13) * paragraphs [0027], [0028]; figures * ----- | 1,10-15 | INV. F16H61/00 |
| A | US 2003/134712 A1 (KATOU KATSUNORI [JP] ET AL) 17 July 2003 (2003-07-17) * paragraphs [0070] - [0074]; figures * ----- | 1-15 | |

**TECHNICAL FIELDS SEARCHED (IPC)**

F16H

The present search report has been drawn up for all claims

| Place of search | Date of completion of the search | Examiner |
|---|---|---|
| Munich | 26 February 2026 | Meritano, Luciano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 3392

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2026

| Patent document cited in search report | Publication date | Patent family member(s) | | Publication date |
|---|---|---|---|---|
| JP 2011007298 A | 13-01-2011 | JP | 4905508 B2 | 28-03-2012 |
| | | JP | 2011007298 A | 13-01-2011 |
| US 2003134712 A1 | 17-07-2003 | DE | 69937115 T2 | 12-06-2008 |
| | | EP | 1132660 A1 | 12-09-2001 |
| | | US | 6491604 B1 | 10-12-2002 |
| | | US | 2003134712 A1 | 17-07-2003 |
| | | WO | 0029765 A1 | 25-05-2000 |

EPO FORM P0459

For more details about this annex : see Official Journal of the European Patent Office, No. 12/82